Europäisches Patentamt

European Patent Office

Office européen des brevets

(19)

(11) Veröffentlichungsnummer: **0 265 023**
**A2**

(12) **EUROPÄISCHE PATENTANMELDUNG**

(21) Anmeldenummer: 87202018.5

(22) Anmeldetag: 20.10.87

(51) Int. Cl.⁴ **C03B 37/012** , **C03B 19/00** , **C03B 20/00** , **C03B 37/025**

(30) Priorität: 22.10.86 DE 3635847

(43) Veröffentlichungstag der Anmeldung:
27.04.88 Patentblatt 88/17

(84) Benannte Vertragsstaaten:
DE FR GB NL

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB NL**

(72) Erfinder: **Clasen, Rolf, Dr.Dipl.-Phys.**
**Schlossparkstrasse 36**
**D-5100 Aachen(DE)**
Erfinder: **Schmidl, Benno**
**Clara-Viebig-Strasse 48**
**D-5107 Simmerath-Lammersdorf(DE)**

(74) Vertreter: **Nehmzow-David, Fritzi-Maria et al**
**Philips Patentverwaltung GmbH**
**Wendenstrasse 35 Postfach 10 51 49**
**D-2000 Hamburg 1(DE)**

(54) **Verfahren und Vorrichtung zur Herstellung von Glaskörpern mittels Strangpressen.**

(57) Verfahren zur Herstellung von Glaskörpern, bei dem aus dem Ausgangsmaterial für den Glaskörper in Form einer Strangpressmasse, bestehend aus hochdispersen $SiO_2$-Partikeln, Bindemittel und Dispergierflüssigkeit, ein poröser Grünkörper durch Strangpressen geformt und dieser anschließend getrocknet, gereinigt und gesintert wird, wobei die Strangpreßmasse über das Mundstück einer Strangpresse geformt in ein Anschlußgefäß extrudiert wird, in welchem der extrudierte Grünkörper in Richtung des Gelpunktes des in der Strangpreßmasse vorhandenen Bindemittels temperiert wird, wobei im Anschlußgefäß eine Flüssigkeit enthalten ist, die nicht oder nahezu nicht mit der in der Strangpreßmasse vorhandenen Dispergierflüssigkeit und keinesfalls mit dem in der Strangpreßmasse vorhandenen Bindemittel mischbar ist sowie Vorrichtung zur Durchführung dieses Verfahrens

## Verfahren und Vorrichtung zur Herstellung von Glaskörpern mittels Strangpressen

Die Erfindung bezieht sich auf ein Verfahren zur Herstellung von Glaskörpern, bei dem aus dem Ausgangsmaterial für den Glaskörper in Form einer Strangpreßmasse, bestehend aus hochdispersen $SiO_2$-Partikeln, Bindemittel und Dispergierflüssigkeit, ein poröser Grünkörper durch Strangpressen geformt und dieser anschließend getrocknet, gereinigt und gesintert wird.

Die Erfindung bezieht sich weiter auf eine Vorrichtung zur Durchführung eines solchen Verfahrens sowie auf die Verwendung der nach dem Verfahren gemäß der Erfindung hergestellten Glaskörper.

Das eingangs genannte Verfahren ist insbesondere geeignet zur Herstellung von Vorformen für optische Wellenleiter aus Quarzglas.

Optische Wellenleiter werden für eine Vielzahl an Anwendungszwecken eingesetzt, so z.B. für Lichtübertragungseinrichtungen oder für Lichtübertragungssysteme, wie optische Kommunikationssysteme, und bestehen überwiegend aus einem Glas mit hohem Siliciumdioxidgehalt (das erforderlichenfalls ein Dotierungsmittel zur Einstellung des Brechungsindex des Glases enthält).

Gläser, die für optische Wellenleiter geeignet sind, sind ebenfalls mit Vorteil verwendbar für die Herstellung von Lampenkolben für Halogen-oder Gasentladungslampen, denn auch diese Gläser müssen, ebenso wie die Gläser für optische Wellenleiter, nahezu wasserfrei sein und einen hohen Siliciumdioxidgehalt aufweisen.

Aus GB-PS 10 10 702 ist ein Verfahren bekannt, bei welchem pulverförmiges reines oder nahezu reines $SiO_2$ mit einem flüssigen Bindemittel in einer Menge von 1 bis 50 Gew.% und gegebenenfalls einem weiteren, den Strangpreßprozeß begünstigenden Gleitmittel in einer Menge von 0,1 bis 10 Gew.%, bezogen auf den $SiO_2$-Anteil, zu einer Strangpreßmasse verarbeitet und über einen Strangpreßprozeß verformt wird. Als flüssige Bindemittel kommen z.B. organische Flüssigkeiten wie Polyvinylalkohol oder Methylcellulose in betracht. Dieses Verfahren entspricht Verfahren aus der keramischen Technologie, bei denen aufgemahlene pulverförmige Rohstoffe mit Korndurchmessern < 1 μm mit Wasser als Dispergierflüssigkeit, Bindemitteln und gegebenenfalls Gleitmitteln zu hochviskosen strangpreßfähigen Massen aufbereitet werden.

Beim Verarbeiten von hochdispersen Ausgangspulvern mit Korndurchmessern > 1 μm (die auch durch übliche Mahlprozesse nicht mehr herstellbar sind), wie sie für die Herstellung von Quarzglaskörpern, insbesondere für Vorformen von optischen Wellenleitern, eingesetzt werden, entstehen nun Probleme beim Mischen bzw. Kneten besonders dann, wenn die Ausgangsmassen hoch gefüllt sind, da eine wesentlich größere Anzahl von Teilchen gleichmäßig verteilt und eine wesentlich größere Oberfläche mit den Zusatzstoffen (Binde- und gegebenenfalls Gleitmittel) gleichmäßig bedeckt werden muß. So liegen beispielsweise die typischen Misch-und Knetzeiten für eine Ausgangsmasse aus hochdispersen $SiO_2$-Teilchen (10 bis 100 nm Teilchendurchmesser) mit 60 Gew.% $SiO_2$ und 36 Gew.% Wasser (Rest Zusatzstoffe) bei einer bis drei Stunden.

Neben diesem hohen Zeitbedarf für die Homogenisierung von hochviskosen Suspensionen (Strangpreßmassen) der letzteren genannten Art ergeben sich noch weitere Probleme:

Bei mangelhaft stabilisierten Suspensionen treten leicht Entmischungserscheinungen auf, was zu Extrusionsproblemen führt. Dies ist auf die stark vergrößerte Oberfläche der Feststoffteilchen in derartigen Suspensionen, auf die mit kleineren Teilchen zunehmende Anzahl der Feststoff-Flüssigkeit-Übergänge sowie auf die Bindungsverhältnisse (wobei van der Waals'sche Kräfte eine zunehmende Rolle spielen und kolloidchemische Aspekte in den Vordergrund treten) zurückzuführen. Geringfügige, ortsabhängige Fluktuationen der Grünkörperdichte und damit der Porendichte führen leicht zu Rißbildung beim Trocknen und zu Krümmungen beim Sintern. Letzteres macht sich besonders bei Glasformkörpern bemerkbar, die über den viskosen Fluß sintern. So führen beispielsweise Umlenkungen der stranggepreßten Formkörper, wie sie in der keramischen Technologie bei der kontinuierlichen Herstellung von Formkörpern mit kleinen Durchmessern üblich sind, bereits zu Störungen in der Homogenität der Porenstruktur, die sich spätestens nach dem Sintern durch Krümmungen des Formkörpers bemerkbar machen.

Der Erfindung liegt die Aufgabe zugrunde, ein Verfahren und eine Vorrichtung zum Strangpressen von Massen mit einem Feststoffanteil an hochdispersen $SiO_2$-Partikeln einer Korngröße im Bereich von 10 bis 500 nm zu schaffen, mit deren Hilfe es weitgehend vermieden wird, daß äußere Kräfte auf den bereits verformten, noch feuchten Grünkörper einwirken.

Diese Aufgabe wird erfindungsgemäß dadurch gelöst, daß die Strangpreßmasse über das Mundstück einer Strangpresse verformt in ein Anschlußgefäß extrudiert wird, in welchem der extrudierte Grünkörper in Richtung des Gelpunktes des in der Strangpreßmasse vorhandenen Bindemittels temperiert wird, wobei im Anschlußgefäß eine Flüssigkeit enthalten ist, die nicht oder nahezu nicht mit der in der Strangpreßmasse vorhandenen Dispergierflüssigkeit und keinesfalls mit dem in der Strangpreßmasse vorhandenen Binde mittel mischbar ist.

Eine Vorrichtung zur Durchführung dieses Verfahrens ist gekennzeichnet durch eine Strangpresse mit einem Behälter zur Aufnahme von Strangpreßmasse, mit einem Stempel, mit dem die Strangpreßmasse in Richtung auf eine Austrittsdüse preßbar ist, mit unterhalb der Austrittsdüse angeordneten Messern, mit denen ein extrudierter Grünkörper nach Erreichen einer gewünschten Länge abschneidbar ist, sowie mit einem unterhalb der Austrittsdüse angeordneten, eine Flüssigkeit enthaltenden, temperierbaren Anschlußgefäß zur Aufnahme des extrudierten Grünkörpers.

Durch das Temperieren des extrudierten Grünkörpers in Richtung auf den Gelpunkt des in der Strangpreßmasse enthaltenen Bindemittels wird erreicht, daß der extrudierte Grünkörper noch vor seiner Trocknung verfestigt wird; auf diese Weise wird einer Veränderung der Porenstruktur des noch feuchten Grünkörpers entgegengewirkt.

Nach einer vorteilhaften Weiterbildung des Verfahrens nach der Erfindung weist die in dem Anschlußgefäß enthaltene Flüssigkeit etwa die gleiche Dichte auf, wie der extrudierte, noch feuchte Grünkörper. Hierdurch wird erreicht, daß eine Temperatur, die die Gelbildung des in der Strangpressmasse enthaltenen Bindemittels bewirkt, schnell und direkt auf den extrudierten Grünkörper übertragen wird, ohne daß der Grünkörper austrocknet und vor allen Dingen nicht an seiner Oberfläche beschädigt wird. Ein weiterer Vorteil der Maßnahme, daß der extrudierte Grünkörper in zunächst eine Flüssigkeit aufgenommen wird, ist, daß von außen auf den Grünkörper einwirkende Kräfte, die z.B. bei der Herstellung von langen, - schweren Grünkörpern auftreten und zu Störungen der Porenstruktur, zu Rißbildung oder gar zum Bruch des Grünkörpers führen können, kompensiert werden.

Nach vorteilhaften weiteren Ausgestaltungen der Erfindung werden als Bindemittel für die Strangpreßmasse Methylcellulose oder Polyvinylalkohol eingesetzt. Bei Verwendung von Methylcellulose als Bindemittel kann eine Gelbildung des Bindemittels bei Temperaturen, die über Raumtemperatur liegen, also durch Aufheizen des Anschlußgefäßes und der in ihm enthaltenen Flüssigkeit bewirkt werden. Ist eine Aufheizung des Systems aus bestimmten Gründen nicht erwünscht, kann eine Gelbildung des Bindemittels auch durch Kühlung des Anschlußgefäßes und der in ihm enthaltenen Flüssigkeit auf eine Temperatur unter Raumtemperatur bewirkt werden; dies ist z.B. möglich, wenn Polyvinylalkohol als Bindemittel eingesetzt wird. Durch von in den Gelzustand überführten Bindemitteln werden Grünkörper einer relativ hohen Festigkeit erreicht, da die Gelbildung an den Kontaktstellen der Feststoffteilchen der Strangpreßmasse auftritt, womit die Ausbildung einer Brückenschicht einhergeht.

Ein besonderer Vorteil des erfindungsgemäßen Verfahrens unter Einsatz der erfindungsgemäßen Vorrichtung ist, daß Formkörper aus hochviskosen Suspensionen mit einem Feststoffanteil an relativ kleinen, hochdispersen $SiO_2$-Teilchen auch eines relativ großen Durchmessers und einer relativ großen Länge (z.B. auch relativ dünnwandige Rohre der genannten Größenverhältnisse) durch Strangpressen hergestellt werden können, ohne daß die gewünschte Geometrie und Porenstruktur über die gesamte Länge des extrudierten Grünkörpers beeinträchtigt werden. Die extrudierten Grünkörper können anschließend riß-und verbiegungsfrei getrocknet, gereinigt und gesintert werden.

Diese Grünkörper sind einerseits so fest, daß sie ohne Schwierigkeiten handhabbar sind, sie weisen eine für die nachfolgende Sinterung des Grünkörpers erwünschte hohe Dichte (35 bis 50% der Dichte kompakten Quarzglases) auf und sie sind andererseits porös und damit gasdurchlässig, so daß sie in einem nach der Trocknung erfolgenden Reinigungsschritt in einer mit vorliegenden Verunreinigungen reagierenden erhitzten Gasphase effizient gereinigt werden können.

Ein weiterer Vorteil ist, daß außerordentlich homogene Grünkörper erhalten werden können; dies ist nicht nur im Hinblick auf einen zu erreichenden blasen-und schlierenfreien Glaskörper von Bedeutung, sondern auch für die Trocknung der Grünkörper. Besonders an Inhomogenitäten im Grünkörper treten häufig Trockenrisse auf. Trockenrisse treten jedoch auch infolge nicht ausreichender Bindungskräfte zwischen den Feststoffteilchen auf, also dann, wenn die Oberfläche der Feststoffteilchen nicht gleichmäßig genug mit Vernetzungsreaktionen fördernden Zusatzstoffen bedeckt ist oder wenn die Vernetzung nur unvollständig erfolgte. Bei hochviskosen Systemen mit großen Oberflächen ist dies problematisch und das Verfahren der vorliegenden Erfindung schafft hier durch die optimierte Verfestigung des noch feuchten Grünkörpers eine entscheidende Verbesserung.

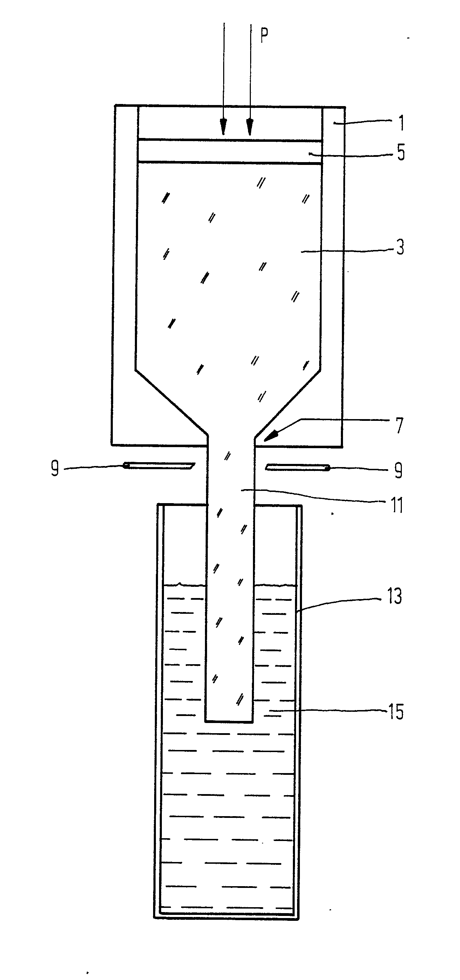

Anhand der Zeichnung werden Ausführungsbeispiele der Erfindung beschrieben und die Erfindung wird in ihrer Wirkungsweise erläutert.

Die Figur zeigt eine Strangpresse nach der Erfindung in einem Betriebszustand im Schnitt.

In einer Strangpresse mit einem Behälter 1 befindet sich zu verpressende Strangpreßmasse 3 in Form einer hochviskosen Suspension, die mittels eines Stempels 5 über eine Austrittsdüse 7 in Form eines Grünkörpers (Stranges) 11 in ein unterhalb der Austrittsdüse 7 angeordnetes Anschlußgefäß 13 extrudiert wird, in welchem eine Flüssigkeit 15 enthalten ist, die auf eine gewünschte Temperatur eingestellt ist und die nicht oder nahezu nicht mit der in der Strangpreßmasse 3 vorhandenen Dispergierflüssigkeit und die keinesfalls mit dem in der Strangpreßmasse 3 vorhandenen Bindemittel mischbar ist. Die Flüssigkeit 15 hat zweckmäßigerweise eine Dichte entsprechend der Dichte des extrudierten Grünkörpers 11. Die Temperatur des Anschlußgefäßes 13 mit der in ihm enthaltenen Flüssigkeit 15 wird auf einen solchen Wert eingestellt, bei dem Gelbildung des in der Strangpreßmasse 3 enthaltenen Bindemittels eintritt. Der extrudierte Grünkörper 11 wird nach Erreichen einer gewünschten Länge mit Messern 9 unterhalb der Austrittsdüse 7 abgeschnitten und anschließend wird das Anschlußgefäß 13 mit dem in ihm in der Flüssigkeit 15 enthaltenen Grünkörper 11 zu einer Trockenstation transportiert; der Grünkörper 11 verbleibt vor der Trocknung so lange in der Flüssigkeit 15, bis das Bindemittel geliert ist.

Die Erfindung wurde mit folgenden Ausführungsbeispielen realisiert:

Beispiel 1.

Eine homogenisierte Strangpreßmasse 3, bestehend aus 63 Gew.% hochdispersen $SiO_2$-Partikeln eines mittleren Korndurchmessers von 40 nm, 4,2 Gew.% Bindemittel, hier Polyvinylalkohol, und 32,8 Gew.% Wasser als Dispergierflüssigkeit wird in der Strangpresse mit einer Geschwindigkeit von 1,50 m/min bei einem Preßdruck von 160 bar in die im Anschlußgefäß 13 enthaltene Flüssigkeit 15 extrudiert; der extrudierte Grünkörper ist im Fall dieses Ausführungsbeispiels ein Rohr eines Außendurchmessers von 30 mm und einer Wandstärke von 5 mm. Die Flüssigkeit 15 besteht aus Nitrobenzol einer Dichte von 1,19 g/cm³ und einer Temperatur von 8 °C. Der aus der Austrittsdüse 7 ausgetretene Grünkörper 11 wird bei einer Länge von 1 m abgeschnitten und verbleibt etwa 1/2 Stunde in dem zu einer Trockenstation transportierten Anschlußgefäß 13. Nach diesem Ausführungsbeispiel hergestellte Grünkörper hatten eine Dichte von etwa 1,7 g/cm³. Nachdem der ·Gelbildungsprozeß des Bindemittels abgeschlossen ist, wird der Grünkörper hängend in ruhender Luft 5 Stunden getrocknet, anschließend wird er in einem Trockenschrank mit einer Aufheizrate von 20 °C pro Stunde auf eine Temperatur von 120 °C erwärmt, um restliches Wasser aus dem Grünkörper zu entfernen. Der getrocknete Grünkörper wird danach in 100 min auf eine Temperatur von 800 °C erhitzt und zur Entfernung von Verunreinigungen über eine Dauer von 1,5 h einem mit $SOCl_2$ gesättigten $O_2$-Gasstrom ausgesetzt. Die anschließende Sinterung erfolgt bei 1500 °C in Heliumatmosphäre mit 2 Vol.% Chlorgaszusatz, wobei der Grünkörper mit einer Absenkgeschwindigkeit von 10 mm/min durch den Ofen geführt wird. Es wurde ein transparentes, gerades Glasrohr eines Außendurchmessers von 24 mm und einer Wandstärke von 4 mm erhalten, das Verunreinigungen, insbesondere Wasser und Übergangsmetalle, nur noch in einer Menge < 50 ppb enthielt. Der Glaskörper hatte eine Dichte von 2,20 g/cm³ und einen Brechungsindex $n_D$ = 1,4591 und war blasen-und schlierenfrei.

In dem beschriebenen Ausführungsbeispiel wurde als Bindemittel für die Strangpreßmasse Polyvinylalkohol eingesetzt; um dieses Bindemittel in den Gelzustand zu überführen, wurde der extrudierte Grünkörper in Nitrobenzol einer Temperatur von 8 °C gekühlt.

Beispiel 2.

Es kann jedoch auch so verfahren werden, daß beispielsweise ein Bindemittel eingesetzt wird, das durch Erwärmen auf eine Temperatur über Raumtemperatur in den Gelzustand übergeht; ein solches Bindemittel ist z.B. Methylcellulose. Eine mit Methylcellulose als Bindemittel aufgebaute Strangpreßmasse hatte die Zusammensetzung 58 Gew.% $SiO_2$-Partikel eines mittleren Korndurchmessers von 40 nm, 4 Gew.% Methylcellulose und 38 Gew.% Wasser als Dispergierflüssigkeit. Der Grünkörper wird in diesem Fall in eine im Anschlußgefäß 13 enthaltene Flüssigkeit 15 in Form von Nitrobenzol einer Dichte von 1,19 g/cm³ und einer Temperatur von 80 -C extrudiert. Die übrigen Verfahrensparameter zur Herstellung eines blasen-und schlierenfreien Quarzglasrohres entsprechen denen, die zu Beispiel 1 beschrieben wurden

**Ansprüche**

1. Verfahren zur Herstellung von Glaskörpern, bei dem aus dem Ausgangsmaterial für den Glaskörper in Form einer Strangpreßmasse, bestehend aus hochdispersen $SiO_2$-Partikeln, Bindemittel und Dispergierflüssigkeit, ein poröser Grünkörper durch Strangpressen geformt und dieser anschließend getrocknet, gereinigt und gesintert wird, dadurch gekennzeichnet,

daß die Strangpreßmasse über das Mundstück einer Strangpresse geformt in ein Anschlußgefäß extrudiert wird, in welchem der extrudierte Grünkörper in Richtung des Gelpunktes des in der Strangpreßmasse vorhandenen Bindemittels temperiert wird, wobei im Anschlußgefäß eine Flüssigkeit enthalten ist, die nicht oder nahezu nicht mit der in der Strangpreßmasse vorhandenen Dispergierflüssigkeit und keinesfalls mit dem in der Strangpreßmasse vorhandenen Bindemittel mischbar ist.

2. Verfahren nach Anspruch 1,
dadurch gekennzeichnet,
daß für die Herstellung der Strangpreßmasse $SiO_2$-Partikel eines Durchmessers im Bereich von 10 bis 500 nm, vorzugsweise von 15 bis 200 nm, mit einem mittleren Teilchendurchmesser von 40 nm eingesetzt werden.

3. Verfahren nach den Ansprüchen 1 und 2,
dadurch gekennzeichnet,
daß eine Strangpreßmasse mit einem Feststoff:Dispergierflüssigkeit/Bindemittel-Gewichtsverhältnis von 1:0,4 bis 1:0,8 eingesetzt wird.

4. Verfahren nach den Ansprüchen 1 bis 3,
dadurch gekennzeichnet,
daß als Dispergierflüssigkeit Wasser eingesetzt wird.

5. Verfahren nach den Ansprüchen 1 bis 4,
dadurch gekennzeichnet,
daß als Bindemittel für die Strangpreßmasse Methylcellulose eingesetzt wird.

6. Verfahren nach den Ansprüchen 1 bis 4,
dadurch gekennzeichnet,
daß als Bindemittel für die Strangpreßmasse Polyvinylalkohol eingesetzt wird.

7. Verfahren nach mindestens einem der Ansprüche 1 bis 6,
dadurch gekennzeichnet,
daß die in dem Anschlußgefäß enthaltene Flüssigkeit etwa die gleiche Dichte aufweist, wie der extrudierte, noch feuchte Grünkörper.

8. Verfahren nach den Ansprüchen 1 bis 7,
dadurch gekennzeichnet,
daß als Strangpreßmasse eine Masse eingesetzt wird, die $SiO_2$-Partikel eines mittleren Teilchendurchmessers von 40 nm in einer Menge von 63 Gew.%, Wasser als Dispergierflüssigkeit in einer Menge von 32,8 Gew.% und Polyvinylalkohol als Bindemittel in einer Menge von 4,2 Gew.% enthält.

9. Verfahren nach Anspruch 8,
dadurch gekennzeichnet,
daß die Strangpreßmasse in das Anschlußgefäß extrudiert wird, in welchem Nitrobenzol einer Dichte von 1,19 g/cm³ und einer Temperatur von 8 °C enthalten ist.

10. Verfahren nach den Ansprüchen 1 bis 7,
dadurch gekennzeichnet,
daß als Strangpreßmasse eine Masse eingesetzt wird, die $SiO_2$-Partikel eines mittleren Teilchendurchmessers von 40 nm in einer Menge von 58 Gew.%, Wasser als Dispergierflüssigkeit in einer Menge von 38 Gew.% und Methylcellulose als Bindemittel in einer Menge von 4 Gew.% enthält.

11. Verfahren nach Anspruch 10,
dadurch gekennzeichnet,
daß die Strangpreßmasse in das Anschlußgefäß extrudiert wird, in welchem Nitrobenzol einer Dichte von 1,19 g/cm³ und einer Temperatur von 80 °C enthalten ist.

12. Verfahren nach den Ansprüchen 8 bis 11,
dadurch gekennzeichnet,
daß der extrudierte Strang nach Erreichen einer gewünschten Länge zwischen dem Mundstück der Strangpresse und dem Anschlußgefäß abgeschnitten wird und im Anschlußgefäß solange belassen wird, bis der Gelierungsprozeß des in der Strangpreßmasse enthaltenen Bindemittels abgeschlossen ist, wonach der extrudierte Grünkörper aus dem Anschlußgefäß entnommen und auf bekannte Weise getrocknet, gereinigt und gesintert wird.

13. Vorrichtung zur Durchführung des Verfahrens nach den Ansprüchen 1 bis 12 gekennzeichnet durch eine Strangpresse mit einem Behälter (1) zur Aufnahme von Strangpreßmasse (3), mit einem Stempel (5), mit dem die Strangpreßmasse in Richtung auf eine Austrittsdüse (7) preßbar ist, mit unterhalb der Austrittsdüse angeordneten Messern (9), mit denen ein extrudierter Grünkörper (11) nach Erreichen einer gewünschten Länge abschneidbar ist, sowie mit einem unterhalb der Austrittsdüse angeordneten, eine Flüssigkeit (15) enthaltenden, auf eine gewünschte Temperatur einstellbaren Anschlußgefäß (13) zur Aufnahme des extrudierten Grünkörpers.

14. Verwendung von nach dem Verfahren gemäß den Ansprüchen 1 bis 12 hergestellten Glaskörpern als Vorform für optische Wellenleiter.

15. Verwendung von nach dem Verfahren gemäß den Ansprüchen 1 bis 12 hergestellten Glasköpern als Vorform für Lampenkolben, insbesondere für Halogen-oder Gasentladungslampen.